# EUROPÄISCHE PATENTSCHRIFT

(11) **EP 0 788 732 B1**
(45) Veröffentlichungstag und Bekanntmachung des Hinweises auf die Patenterteilung: **19.07.2000**
(21) Anmeldenummer: 97101522.7
(22) Anmeldetag: 31.01.1997
(51) Int. Cl.: A01F 15/07

(54) **Rundballenpresse**
Rotobaler
Presse à balles rondes

(30) Priorität: 06.02.1996 DE 19604119
(43) Veröffentlichungstag der Anmeldung: 13.08.1997
(73) Patentinhaber: LELY WELGER Maschinenfabrik GmbH, 38304 Wolfenbüttel (DE)
(72) Erfinder: Honhold, Joost, 38302 Wolfenbüttel (DE); Röhrbein, Jürgen, 38159 Vechelde (DE); Wilkens, Dieter, Dr., 38302 Wolfenbüttel-Ahlum (DE)

(56) Entgegenhaltungen:
- FR-A- 2 373 959
- GB-A- 2 069 403
- US-A- 4 198 804
- US-A- 5 301 495

## Beschreibung

Die Erfindung betrifft eine Rundballenpresse für landwirtschaftliche Halmgüter, wie Heu, Stroh und Silage, bestehend aus einem etwa zylindrischen Preßraum, an dessen Umfang mehrere aneinandergereihte Preßwalzen aus Stahl angeordnet sind, wobei die Oberfläche des Walzenmantels von einen gegenseitigen Umfangsabstand aufweisenden Längsrippen in Form linienförmiger Materialfaltungen des Walzenmantels gebildet ist.

Eine Rundballenpresse mit einer derartigen Preßwalze ist in dem DE 8329151 U1 dargestellt und beschrieben. Hierbei sind acht Längsrippen vorgesehen, von denen jeweils zwei in orthogonalen Längsmittelebenen der Preßwalze liegen. Hinsichtlich der Griffigkeit der Preßwalzen zeigt diese Ausführung der Preßwalze zur Drehung des zu formenden Ballens in verschiedensten Halmgütern gute Ergebnisse, jedoch kommt es insbesondere bei der in jüngster Zeit zunehmend zu verarbeitenden Silage zu Brüchen der Preßwalzen. Hierbei sind Ballengewichte von mehr als 1000 kg bei ca. 1,3 m Ballendurchmesser durchaus praktikabel, so daß die Preßwalzen einerseits durch den Verdichtungsdruck der Preßwalzen auf das zu pressende Halmgut und andererseits aber auch durch das hohe Ballengewicht extrem belastet werden. Die Erhöhung der Materialstärke des Walzenmantels ist wegen der Materialfaltungen aus fertigungstechnischen Gründen nur sehr begrenzt möglich. Gleiches gilt für die Werkstoffauswahl und konstruktive Gestaltung der Faltenform.

Ferner ist durch die DE 40 25 467 A 1 eine Rundballenpresse mit einer Starterwalze bekannt, bei der fünf Flacheisenstäbe auf einem zylindrischen Rohr über dessen Umfang ungleichmäßig verteilt angebracht sind. Die Flacheisenstäbe sind relativ hoch und scharfkantig, so daß sie zwar eine kräftige Förderwirkung haben, jedoch das Gut zerkleinern (Gutsverluste) und insbesondere das Umhüllungsmittel, wie Garn oder Netz beschädigen. Darüber hinaus ist die Walze herstellungstechnisch aufwendig und insbesondere festigkeitsmäßig ungünstig, weil ein Aufschweißen, Nieten oder Aufschrauben der Flacheisenstäbe das Rohr an den Verbindungsstellen schwächt.

Der Erfindung liegt die Aufgabe zugrunde, eine Rundballenpresse der eingangs näher beschriebenen Art so zu verbessern, daß die Haltbarkeit der Preßwalzen bei extremer Belastung auf einfache Weise erheblich erhöht wird. Diese Aufgabe wird erfindungsgemäß dadurch gelöst, daß die Längsrippen über den Umfang der Preßwalze so verteilt angeordnet sind, daß sie nicht gleichzeitig in zwei zueinander orthogonalen Längsmittelebenen der Preßwalze liegen.

Der Grundgedanke der Erfindung beruht auf der Erkenntnis, daß die Zugspannungen in den Längsrippen maximal sind, die gegenüber der Krafteinleitungsstelle in Umfangsrichtung um 90° versetzt sind. Krafteinleitungsstelle in eine Preßwalze ist hierbei eine Längsrippe, die in einer Längsmittelebene durch Preßraummittelpunkt und Preßwalzenmittelpunkt liegt. Versuche mit Preßwalzen, bei denen diese gefährdetsten Längsrippen aus der 90° Zone verlegt wurden, haben bei sonst gleicher Preßwalzenausführung eine erheblich höhere Belastbarkeit von ca. 20 % der Preßwalze ergeben, ohne irgendwelche Rißerscheinungen zu zeigen.

Eine besonders vorteilhafte Ausführungsform wird dadurch erreicht, daß mindestens zehn Längsrippen über den Umfang des Walzenmantels gleichmäßig verteilt sind, wodurch über den Walzenumfang relativ zur bekannten 8-Längsrippen-Preßwalze ein deutlicher Abbau der Spannungsspitzen erzielt wird.

Weitere Ausgestaltungen ergeben sich aus den Unteransprüchen. Ein Ausführungsbeispiel wird anhand der Zeichnung näher erläutert. Es zeigt:
- Fig. 1: eine Seitenansicht der Rundballenpresse bekannter Bauart,
- Fig. 2: einen Querschnitt durch eine Preßwalze 2 bekannter Bauart mit acht Längsrippen im unverformten und verformten Zustand unter Lasteinwirkung und
- Fig. 3: ein Ausführungsbeispiel der erfindungsgemäßen Preßwalze 16.

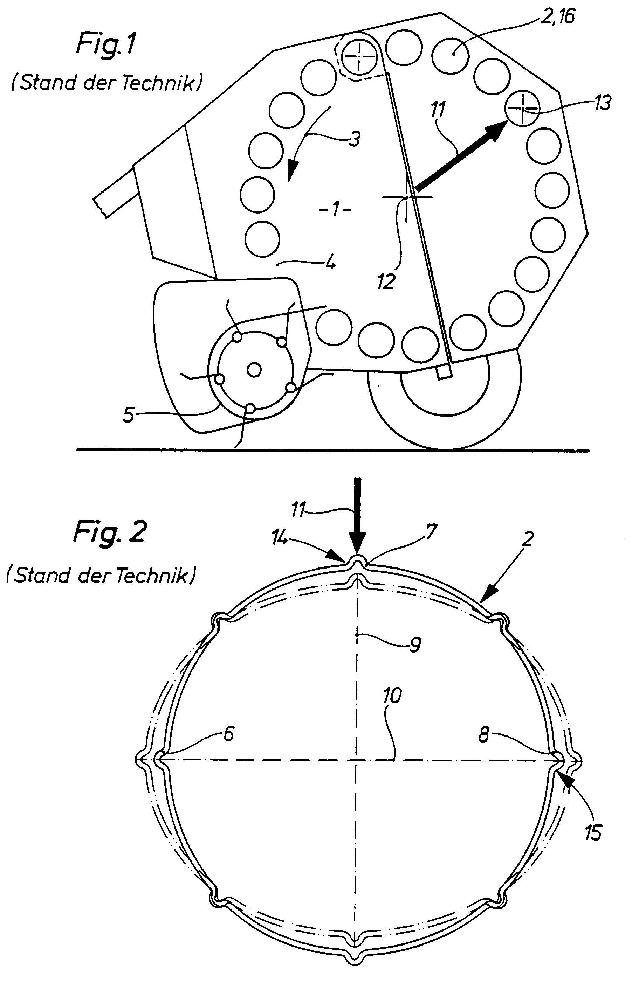

Die Fig. 1 zeigt eine Rundballenpresse bekannter Bauart mit am Umfang eines zylindrischen Preßraumes 1 angeordneten Preßwalzen 2. Die Preßwalzen 2 sind dicht aneinandergereiht, in einer gemeinsamen Umlaufrichtung 3 angetrieben und lassen an der Vorderseite einen Einzugsspalt 4 für das Erntegut frei. Mit Hilfe einer Aufnahmevorrichtung 5 wird das Erntegut vom Boden aufgenommen und in den Preßraum 1 eingeführt.

Die in Figur 2 dargestellte, bekannte Preßwalze 2 hat acht Längsrippen 6, die über den Umfang des Walzenmantels gleichmäßig verteilt sind, so daß jeweils zwei Längsrippen 7, 8 in zueinander rechtwinkligen Längsmittelebenen 9, 10 der Preßwalze 2 liegen. Die Herstellung dieser Längsrippen erfolgt beispielsweise in einer Vorrichtung, wie sie in der DE Nr. 9113338 U1 der Anmelderin dargestellt und beschrieben ist.

Während des Preßvorganges baut sich mit zunehmender Gutszufuhr im Preßraum 1 ein Preßdruck auf. In vereinfachter Darstellung wirkt dabei auf jede Preßwalze 2 ein Kraftvektor 11, der vom Preßraummittelpunkt 12 in radialer Richtung nach außen durch den Preßwalzenmittelpunkt 13 verläuft. Der ungünstigste Belastungsfall tritt dann ein, wenn sich eine Längsrippe 7 in der Verbindungslinie zwischen Preßraummittelpunkt 12 und Preßwalzenmittelpunkt 13 befindet. Dabei verformt sich die Preßwalze 2 in eine in Strichpunktlinien dargestellte, elliptische Form (Fig. 2). Im äußeren Rippengrund 14 der Längsrippe 7 an der Krafteinleitungsstelle ergeben sich Druckspannungen, während in den um 90° versetzten Längsrippen 6, 8 im äußeren Rippengrund 15 hohe Zugspannungen (Material reißt auseinander) erzeugt werden, die Rißeinleitungsstellen für spätere Brüche verursachen.

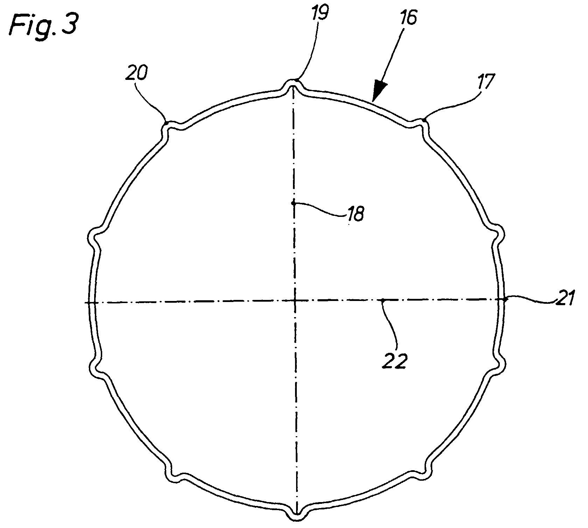

Die Fig. 3 der Zeichnung zeigt eine Ausführungsform der neuen Preßwalze 16 mit zehn Längsrippen 17. Ausgehend von der Krafteinleitung in eine in einer Längsmittelebene 18 liegenden Längsrippe 19 sind die übrigen 9 Längsrippen 20 über den Umfang der Preßwalze 16 gegeneinander um 36° zueinander winkelversetzt angeordnet, so daß sich im Bereich 21 der Preßwalze 16, der gegenüber der Krafteinleitungsstelle in Umfangsrichtung um 90° versetzt ist (horizontale Längsmittelebene 22), keine Längsrippe befindet. Praktische Versuche haben ergeben, daß hiermit eine deutliche Lebensdauerverlängerung der Preßwalzen trotz höherer Belastung erzielt wird.

## Patentansprüche

1. Rundballenpresse für landwirtschaftliche Halmgüter, wie Heu, Stroh und Silage, bestehend aus einem etwa zylindrischen Preßraum (1), an dessen Umfang mehrere aneinandergereihte Preßwalzen (16) aus Stahl angeordnet sind, wobei die Oberfläche des Walzenmantels von einen gegenseitigen Umfangsabstand aufweisenden Längsrippen (17, 19, 20) in Form linienförmiger Materialfaltungen des Walzenmantels gebildet ist, **dadurch gekennzeichnet**, daß die Längsrippen (17, 19, 20) über den Umfang der Preßwalze (16) so verteilt angeordnet sind, daß sie nicht gleichzeitig in zwei zueinander orthogonalen Längsmittelebenen (18, 22) der Preßwalze (16) liegen.

2. Rundballenpresse nach Anspruch 1, **dadurch gekennzeichnet**, daß mindestens zehn Längsrippen (17, 19, 20) über den Umfang des Walzenmantels gleichmäßig verteilt sind.

3. Rundballenpresse nach Anspruch 1, **dadurch gekennzeichnet**, daß eine ungerade Anzahl von mindestens neun Längsrippen (17, 19, 20) gleichmäßig über den Umfang des Walzenmantels verteilt ist.

4. Rundballenpresse nach einem der vorhergehenden Ansprüche, **dadurch gekennzeichnet**, daß die Preßwalze (16) aus einem Rohr gefertigt ist.

5. Rundballenpresse nach einem der Ansprüche 1 bis 3, **dadurch gekennzeichnet**, daß die Preßwalze (16) aus zwei miteinander verbundenen Halbschalen besteht.

## Claims

1. A round baler for agricultural stalk material, such as hay, straw and silage, consisting of an approximately cylindrical baling chamber (1), at the circumference of which there is arranged a succession of several baling rollers (16) of steel, the surface of the roller shell exhibiting longitudinal ribs (17, 19, 20), mutually spaced about the circumference, in the form of linear folds of the roller shell material, **characterised in that** the longitudinal ribs (17, 19, 20) are so distributed about the circumference of the baling roller (16) that they do not lie simultaneously in two mutually orthogonal longitudinal central planes (18, 22) of the baling roller (16).

2. A round baler according to claim 1, **characterised in that** at least ten longitudinal ribs (17, 19, 20) are distributed evenly about the circumference of the roller shell.

3. A round baler according to claim 1, **characterised in that** an uneven number of at least nine longitudinal ribs (17, 19, 20) are distributed evenly about the circumference of the roller shell.

4. A round baler according to one of the preceding claims, **characterised in that** the baling roller (16) is made from a tube.

5. A round baler according to one of claims 1 to 3, **characterised in that** the baling roller (16) consists of two half shells connected together.

## Revendications

1. Presse à balles rondes pour chaumes agricoles, tels que le foin, la paille et le fourrage ensilé, constituée d'un espace pour presse cylindrique (1) sur la périphérie duquel sont disposés les uns à côté des autres plusieurs rouleaux presseurs (16) en acier, la surface du bandage du rouleau comportant des nervures longitudinales (17, 19, 20) présentant une distance périphérique réciproque sous forme de plis linéaires de la matière du bandage du rouleau, caractérisée en ce que les nervures longitudinales (17, 19, 20) sont disposées et réparties sur la périphérie du rouleau presseur (16) de manière qu'elles ne se trouvent pas en même temps sur deux plans médians longitudinaux (18, 22) orthogonaux entre eux du rouleau presseur (16).

2. Presse à balles rondes selon la revendication 1, caractérisée en ce qu'au moins dix nervures longitudinales (17, 19, 20) sont réparties régulièrement sur la périphérie du bandage du rouleau.

3. Presse à balles rondes selon la revendication 1, caractérisée en ce qu'un nombre impair d'au moins neuf nervures longitudinales (17, 19, 20) sont réparties régulièrement sur la périphérie du bandage du rouleau.

4. Presse à balles rondes selon l'une quelconque des revendications précédentes, caractérisée en ce que le rouleau presseur (16) est fabriqué à partir d'un tube.

5. Presse à balles rondes selon l'une des revendications 1 à 3, caractérisée en ce que le rouleau presseur (16) est constitué de deux demi-coques jointes.
